Europäisches Patentamt

**European Patent Office**

Office européen des brevets

(19)

(11) Publication number: **0 036 419**
**B1**

(12) **EUROPEAN PATENT SPECIFICATION**

(45) Date of publication of patent specification: **22.06.83**

(51) Int. Cl.³: **H 02 K 15/00, H 01 R 39/14**

(21) Application number: **80901804.7**

(22) Date of filing: **02.10.80**

(86) International application number:
**PCT/GB80/00152**

(87) International publication number:
**WO 81/01083 16.04.81 Gazette 81/9**

(54) METHODS OF COUPLING COMPONENTS FOR DYNAMO-ELECTRIC MACHINES.

(30) Priority: **03.10.79 GB 7934226**

(43) Date of publication of application:
**30.09.81 Bulletin 81/39**

(45) Publication of the grant of the patent:
**22.06.83 Bulletin 83/25**

(84) Designated Contracting States:
**FR**

(56) References cited:
**FR - A - 1 166 907**
**GB - A - 584 006**
**GB - A - 642 297**
**GB - A - 2 003 674**
**US - A - 1 401 708**
**US - A - 2 600 312**
**US - A - 3 036 023**
**US - A - 3 133 217**
**US - A - 3 447 011**
**US - A - 3 819 967**
**US - A - 4 059 898**

(73) Proprietor: **TRICO-FOLBERTH LIMITED**
**Great West Road**
**Brentford Middlesex TW8 9HP (GB)**

(72) Inventor: **HUNT, Albert Henry**
**3 East Close**
**Greenford Middlesex (GB)**

(74) Representative: **Gordon, Michael Vincent et al,**
**Gill Jennings & Every 53 to 64 Chancery Lane**
**London, WC2A 1HN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

## Methods of coupling components for dynamo-electric machines

This invention relates to methods of coupling components for dynamo-electric machines and is particularly useful in connection with the assembly of small electric motors for ancilliary equipment suitable for motor vehicles.

Hitherto, the coupling of commutator and armature components mounted on a common shaft of a small c.d. motor has been achieved usually either by adhesive applied to plain radial end surfaces provided on the two components mentioned, or by inter-engaging dogs and corresponding recesses provided on them instead.

U.S. Patent 3 447 011, however, has disclosed a method of coupling in which an insulation sleeve for a component carrying windings has an annular extension which is received within an annular recess formed in an insulation sleeve for a component carrying contacts. Two objects of that arrangement are to provide desirable surface creep resistance, and to prevent end turns of the windings connected to the contacts from touching the common shaft. These objects are still achieved even if the annular extension were to rotate slightly within the annular recess.

In contrast, a particular object of the present invention has been to ensure that the components for carrying the windings and the contacts are maintained in a fixed angular relationship.

The present invention applies generally to the coupling of windings (armature or field) to contacts (commutator or slip-ring) in dynamo-electric machines (d.c. or a.c.).

According to the present invention, a method of coupling a first component for carrying windings in fixed angular relationship to a second component for carrying contacts on a common shaft of a dynamo-electric machine, comprises mounting the components on the shaft, each of the components having a respective moulded insulation sleeve integral therewith and concentric with the shaft, one of the sleeves having an axial extension, which is also concentric with the shaft, for penetrating an adjacent end of the other sleeve and thereby effecting coupling of the components, and moving the components relatively towards one another along the shaft to effect the coupling, the components, at least when so coupled, fitting the shaft for rotation therewith, characterised in providing the extension on the sleeve of the second component, the extension either being constituted by a plurality of projections or the extension comprising a spigot supporting a plurality of projections, the projections being similar to one another and equispaced in an array centred on the axis of the shaft and harder than the sleeve of the first component, and forcing the projections against the adjacent end of the sleeve of the first component to embed them therein with accompanying deformation of that sleeve by the projections.

The first and second components are maintained coupled by friction between them and the shaft. Sometimes, particularly when the harder of the two components is brittle and of small diameter, there is risk of bursting the harder component if, in order to increase friction between it and the shaft, it fits the shaft very tightly. The friction needs to be sufficient to resist dislodgement of the components on the shaft whether by impulse torque loading of the machine when starting up or changing speed, or by possible reaction with an axial force component between the projections and the sleeve tending to separate the two components. The reaction may be minimised by providing each projection with a driving face which extends longitudinally of the shaft and parallel to a diameter thereof.

One example according to the present invention will now be described with reference to the accompanying drawings, in which:

Figure 1 is a fragmentary view of an armature before winding and a commutator assembled on a common rotor shaft;

Figure 2 is a longitudinal section of a fragment of Figure 1 but before coupling of the components; and

Figure 3 is an end view of the commutator and shaft on line III—III of Figure 2.

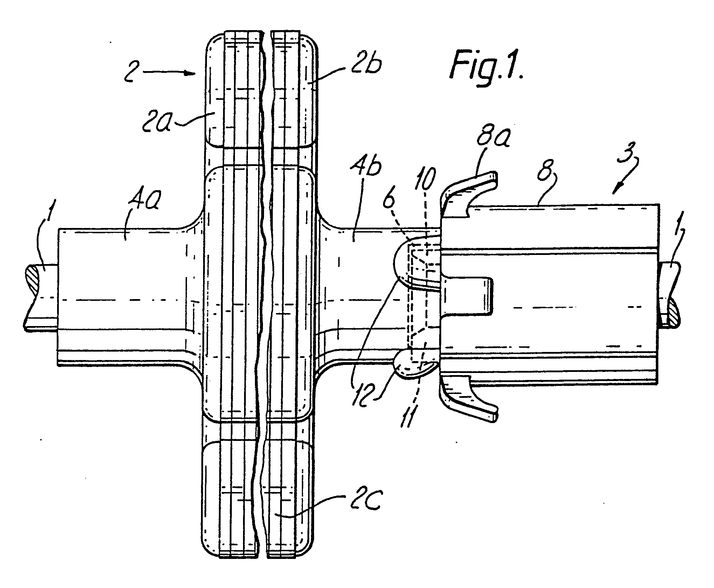

Referring to the drawings, Figure 1 shows an assembly comprising a shaft 1 on which an armature 2 and a commutator 3 are coupled together. The armature comprises two spaced end plates 2a, 2b clamping between them a pack of pierced metal laminations 2c, the end plates 2a, 2b and the commutator 3 each having a bore with an interference fit on the shaft 1 to ensure rotation with it.

Each end plate 2a, 2b of the armature is a spider profiled as the laminations 2c with which the plate is aligned, and is supported on the shaft 1 by a respective sleeve 4a, 4b, moulded integral with the end plate and penetrated by a bore 5. Sleeve 4b also has a counterbore 6 at the outer end. The end plate material is a thermoplastics of high creep resistance and such as will keep its shape should a motor comprising the armature and commutator assembly stall temporarily and become hot. Suitable materials are acetyl polyurethane and polyethersulphone, the latter material softening at higher temperatures than the former material.

The commutator 3 comprises a cylindrical body 7 of thermosetting plastics, suitably a cotton-filled phenolic resin moulding in the periphery of which are embedded copper contact segments 8 formed with tabs 8a for connection to windings (not shown). The commutator is penetrated by a bore 9 for receiving the shaft 1 and has a short coaxial extension of which a spigot 10 extends into the counterbore 6 of the sleeve 4b.

The spigot 10 however is moulded with three equispaced projections 11, Figure 3, in an array encircling the shaft axis. The projections protrude radially to the extent that they embed themselves in the wall of the counterbore and preferably, as shown, protrude to at least the outer radius of the sleeve 4b to maximise driving face contact with the sleeve when coupled therewith as described below. Opposite driving faces of each projection which are longitudinal of the shaft are parallel to a diameter of the shaft.

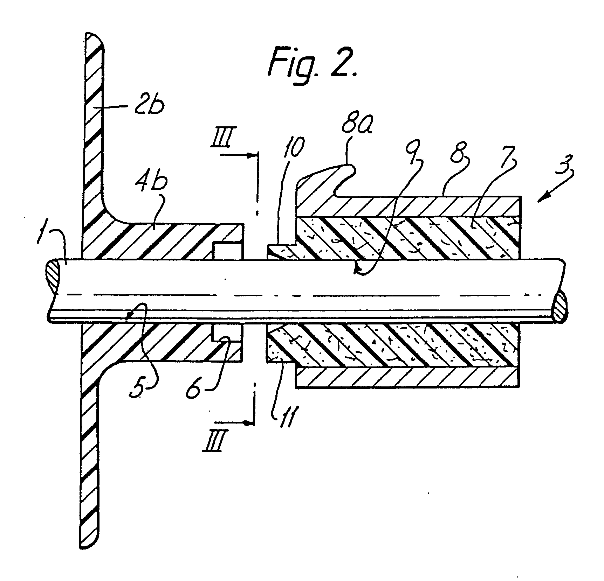

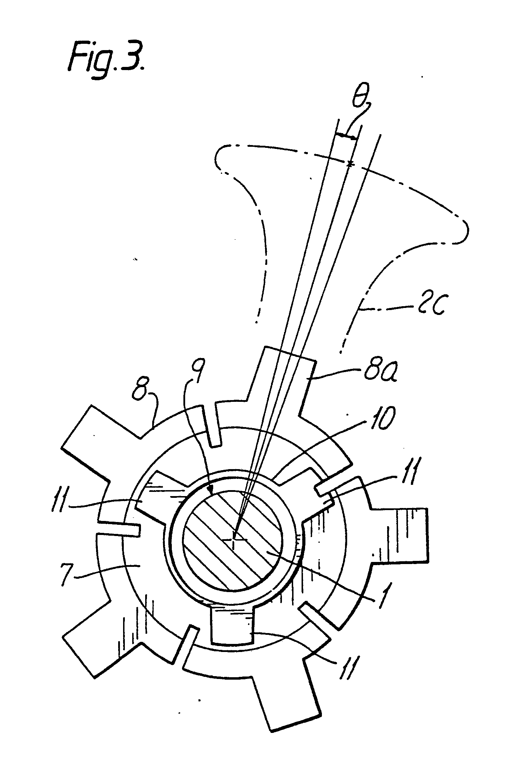

The two components, namely the armature 2 and the commutator 3, are assembled on the shaft 1 as in Figure 2, in the desired relative angular position ideally so that each tab 8a aligns with the adjacent row of limbs of the spider-shaped laminations 2c. A tolerance $\theta$, see Figure 3, equal to about ±3° is acceptable. then assembly is completed by moving the components relatively towards each other along the shaft to enter the spigot 10 into the counterbore 6 and to force the projections 11 against the sleeve 4b and embed them therein, the body 7 of the commutator including the spigot 10 and projections 11 being harder than the sleeve 4b. The projections 11 displace the material of the sleeve 4b locally as indicated by reference 12.

The armature 2 and the commutator 3 are thereby coupled together in fixed angular relationship and will remain in their final relative angular positions because of friction between them and the shaft 1.

The present of the counterbore 6 in the illustrated example facilitates the displacement of the sleeve material by the projections and thereby penetration into the sleeve 4b. The projections are reinforced by being integral with the spigot 10.

The coupling operation can be carried out at room temperature and is achieved simply and cheaply, for example by use of a toggle-controlled pneumatically-actuated plunger, without adhesive or use and alignment of accurately machined dogs or splines and corresponding recesses.

## Claims

1. A method of coupling a first component (2) for carrying windings in fixed angular relationship to a second component (3) for carrying contacts on a common shaft (1) of a dynamo-electric machine, comprising mounting the components (2, 3) on the shaft (1), each of the components (2, 3) having a respective moulded insulation sleeve (4b, 7) integral therewith and concentric with the shaft (1), one of the sleeves (7) having an axial extension (11; 10, 11), which is also concentric with the shaft (1), for penetrating an adjacent end of the other sleeve (4b) and thereby effecting coupling of the components (2, 3), and moving the components (2, 3) relatively towards one another along the shaft (1) to effect the coupling, the components (2, 3), at least when so coupled, fitting the shaft (1) for rotation therewith, characterised in providing the extension (11; 10, 11) on the sleeve of the second component (3), the extension either being constituted by a plurality of projections (11) or the extension comprising a spigot (10) supporting a plurality of projections (11), the projections (11) being similar to one another and equispaced in an array centred on the axis of the shaft (1) and harder than the sleeve (4b) of the first component (2), and forcing the projections (11) against the adjacent end of the sleeve (4b) of the first component (2) to embed them therein with accompanying deformation of that sleeve (4b) by the projections (11).

2. A method according to claim 1 in which the adjacent end of the sleeve (4b) of the first component (2) presents a counterbore (6) for receiving the spigot (10), and the spigot (10) and the counterbore (6) are concentric with the shaft (1), characterised in moulding the projections (11) integrally with the spigot (10) so that the projections (11) extend radially outwardly from the spigot (10) to a greater radius than that of the counterbore (6), and embedding the projections (11) in the adjacent end of the sleeve (4b) of the first component (2) in the region thereof which defines the counterbore (6), thereby causing deformation of that region during the coupling.

3. A method according to claim 1 or claim 2, characterised in forming each of the projections (11) with a driving face which extends longitudinally of the shaft (1) and parallel to a diameter thereof.

4. A method according to any one of claims 1 to 3, characterised in that the sleeve (4b) of the first component (2) consists of acetyl polyurethane.

5. A method according to any one of claims 1 to 3, characterized in that the sleeve (4b) of the first component (2) consists of polyethersulphone.

6. A method according to any preceding claim, characterised in that the projections (11) consist of a cotton-filled phenolic resin.

## Revendications

1. Procédé d'accouplement d'un premier élément (2) destiné à porter des enroulements en relation angulaire fixe à un second élément (3) destiné à porter des contacts, sur un arbre commun (1) d'une machine dynamoélectrique, dans lequel on monte les éléments (2, 3) sur l'arbre (1), chacun des éléments (2, 3) présentant un manchon d'isolation correspondant (4b, 7) moulé d'une seule pièce avec lui et concentrique avec l'arbre (1), l'un des manchons (7) présentant un prolongement axial (11; 10, 11), également concentrique avec l'arbre (1), destiné à pénétrer dans une extrémité adjacente de l'autre manchon (4b) et ainsi réaliser l'accouplement des éléments (2, 3) et on déplace les éléments (2, 3) l'un vers l'autre le long de l'arbre (1) afin de réaliser l'accouplement, les éléments (2, 3), au moins lorsqu'ils sont ainsi accouplés, étant fixés à l'arbre (1) pour tourner avec lui, caractérisé par le fait qu'on prévoit le prolongement (11; 10, 11) sur le manchon du second élément (3), le prolongement étant soit constitué par plusieurs saillies (11), soit comprenant un embout (10) portant plusieurs saillies (11), les saillies (11) étant semblables les unes aux autres et régulièrement réparties autour de l'axe de l'arbre (1), et plus dures que le manchon (4b) du premier élément (2), et on applique les saillies (11) contre l'extrémité adjacente du manchon (4b) du premier élément (2) pour y encastrer, avec une déformation associée de ce manchon (4b) par les saillies (11).

2. Procédé selon la revendication 1, dans lequel l'extrémité adjacente du manchon (4b) du premier élément (2) présente un contre-alésage (6) destiné à recevoir l'embout, (10), l'embout (10) et le contre-alésage (6) étant concentriques avec l'arbre (1), caractérisé par le fait qu'on moule les saillies (11) en une seule pièce avec l'embout (10), de façon que les saillies (11) s'étendent radialement vers l'extérieur à partir de l'embout (10) avec un rayon supérieur à celui du contre-alésage (6), et on encastre les saillies (11) dans l'extrémité adjacente du manchon (4b) du premier élément (2) dans la région de celle-ci qui définit le contre-alésage (6), en provoquant ainsi la déformation de cette région lors de l'accouplement.

3. Procédé selon l'une des revendications 1 et 2, caractérisé par le fait que l'on munit chacune des saillies (11) d'une face d'entraînement qui s'étend longitudinalement par rapport à l'arbre (1) et parallèlement à un diamètre de celui-ci.

4. Procédé selon l'une quelconque des revendications 1 à 3, caractérisé par le fait que le manchon (4b) du premier élément (2) est constitué d'acétylpolyuréthane.

5. Procédé selon l'une quelconque des revendications 1 à 3, caractérisé par le fait que le manchon (4b) du premier élément (2) est constitué de polyéther-sulfone.

6. Procédé selon l'une des revendications précédentes, caractérisé par le fait que les saillies (11) sont réalisées en une résine phénolique chargée de coton.

**Patentansprüche**

1. Verfahren zum Koppeln eines ersten, Windungen tragenden Bauteiles (2) mit einem zweiten, Kontakte tragenden Bauteil (3) auf einer gemeinsamen Welle (1) einer Dynamoelektrischen Maschine in fester Winkelzuordnung, wobei die Montage der Bauteile (2, 3) auf der Welle (1) erfolgt und jeder Bauteil (2, 3) eine einstückig geformte und konzentrisch zur Welle (1) angeordnete, isolierende Hülse (4b, 7) aufweist, wobei ferner eine der Hülsen (7) einen sich axial sowie konzentrisch zur Welle (1) erstreckenden Fortsatz (11; 10, 11) zum Einfügen in das benachbarte Ende dere anderen Hülse (4b) besitzt, was eine Kopplung der Bauteile (2, 3) bewirkt, und wobei Bauteile (2, 3) relativ zueinander längs der Welle (1) zur Erzielung der Verbindung bewegt werden, wobei die Bauteile (2, 3) wenigstens nach der Kopplung drehfest mit der Welle (1) verbunden sind, dadurch gekennzeichnet, daß der Fortsatz (11; 10, 11) auf der Hülse des zweiten Bauteiles (3) vorgesehen ist, daß er entweder durch mehrere Vorsprünge (11) gebildet wird oder ein Zapfen (10) ist, der mehrer Vorsprünge (11) trägt, daß die Vorsprünge (11) einander ähnlich sind und in gleichem Abstand in einem Bereich zentrisch zur Achse der Welle (1) angeordnet und härter als die Hülse (4b) des ersten Bauteiles (2) sind, und daß die Vorsprünge (11) gegen das benachbarte ende der Hülse (4b) des ersten Bauteiles zum Einbetten in diesem gedrückt werden, wobei eine Verformung der Hülse (4b) durch die Vorsprünge (11) erfolgt.

2. Verfahren nach Anspruch 1, wobei das benachbarte ende der Hülse (4b) im ersten Bauteil (2) eine bohrung (6) zur Aufnahme des Zapfens (10) aufweist und der Zapfen (10) und die Bohrung (6) konzentrisch zur Welle (1) angeordnet sind, dadurch gekennzeichnet, daß die Vorsprünge (11) einstückig mit dem Zapfen (10) derart geformt sind, daß sie sich radial auswärts vom Zapfen (10) bis auf einen größeren Radius als die Bohrung (6) erstrecken, und daß die Vorsprünge (11) im benachbarten Ende der Hülse (4b) des ersten Bauteiles (2) in demjenigen Bereich eingebettet werden, welcher die Bohrung (6) bildet, wodurch sich während der Herstellung der Kopplungsverbindung in diesem Bereich eine Verformung ergibt.

3. Verfahren nach Anspruch 1 oder 2, dadurch gekennzeichnet daß an jedem der Vorsprünge (11) eine kraftübertragende Fläche bzw. Mitnehmerfläche ausgebildet wird, die sich in Längsrichtung der Welle (1) und parallel zu einem Durchmesser derselben estreckt.

4. Verfahren nach einem der Ansprüche 1 bis 3, dadurch gekennzeichnet, daß die Hülse (4b) des ersten Bauteiles (2) aus Acetyl-Polyurethan besteht.

5. Verfahren nach einem der Ansprüche 1—3, dadurch gekennzeichnet, daß die Hülse (4b) des ersten Bauteiles (2) aus Polyethersulphon besteht.

6. Verfahren nach einem der vorgehenden Ansprüche, dadurch gekennzeichnet, daß die Vorsprünge (11) aus einem Phenol-Harz mit Baumwollfüllung bestehen.

Fig.1.

0 036 419

Fig. 2.

# Fig.3.